# EUROPEAN PATENT APPLICATION

(11) **EP 1 619 771 A1**
(43) Date of publication of application: **25.01.2006**
(21) Application number: 04425455.5
(22) Date of filing: 22.06.2004
(51) Int. Cl.: H02K 3/50

(54) **Stator unit for a rotary electrical machine and its method of assembly**

(71) Applicant: EMBRACO EUROPE S.r.l., 10121 Torino (IT)
(72) Inventor: Marino, Michele, I-10153 Torino (IT)
(74) Representative: Gerbino, Angelo

(57) **Abstract**

A stator unit comprising a stator formed by a pack (10) of magnetic sheets and by at least one winding formed by coils comprising bundles of electrically conductive wires housed in cavities (12) of the pack (10) and having heads (14) which project from opposite faces of the pack (10), a connector device (18) comprising a body (20) having a plurality of oblong cavities (40), open at their ends and along one side, which extend longitudinally, which cavities (40) house respective connections (26) between ends (28) of the wires of the coils of the winding and ends (30) of wires for the electrical supply of the winding, means for associating the body (20) of the connector device (18) with the heads (14) of the coils, and a cover (22) for at least the partial closure of the open longitudinal side of the cavities (40) of the body (20), this cover (22) being provided with means retaining it on the body (20) and means exerting pressure on the ends (30) of the electrical supply wires disposed in a respective cavity (40).

## Description

The present invention relates to a stator unit for a rotary electrical machine, in particular for an electric motor for compressors for refrigerators and the like.

Prior document WO-A-98 01 933 discloses a stator unit having the characteristics set out in the preamble of claim 1. In particular, in this stator unit the connections between the ends of the wires of the coils of the windings and the ends of the electrical supply wires are housed in respective branches of the cavities which extend substantially transversely with respect to their main trunk. A configuration of this type is not completely satisfactory from the point of view of preventing the accidental detachment of the ends of the supply wires from the connection device. Moreover, any detachment stresses work directly on the connections with the risk of compromising the continuity of the electrical connections.

In order to obviate these drawbacks, the present invention relates to a stator unit having the features set out in one of claims 1 to 12.

The present invention further relates to a method having the features set out in claim 13 for the assembly of a stator unit of the above-mentioned type, an electric motor having the features set out in claim 14 and a compressor having the features set out in claim 15.

Advantages and features of the present invention will be set out in the following detailed description, given by way of non-limiting example and made with reference to the accompanying drawings, in which:
Fig. 1 is a perspective view of a stator unit of the invention in the assembled configuration;
Figs. 2, 3 and 4 are respective perspective views of some components of the stator unit of Fig. 1 during subsequent stages of the method of assembly, in which, for purposes of greater clarity, the coils of the windings are not shown;
Fig. 5 is a front elevation solely of the connector device of the stator unit of the previous drawings, with the cover closed on the body;
Fig. 6 is a top plan view solely of the connector device of the stator unit of the previous drawings, with the cover closed on the body; and
Fig. 7 is a cross-sectional view along the line VII-VII of Fig. 5, further showing the connection between the ends of the wires of the coils and the supply wires.

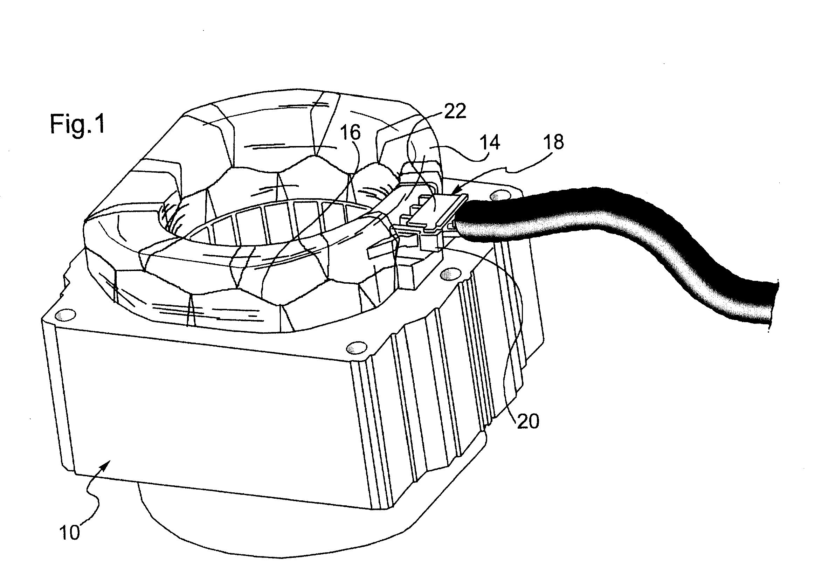

A stator unit for a rotary electrical machine, in particular for an electric motor for hermetic compressors for refrigerators and the like, comprises (Fig. 1) a stator formed by a pack 10 of magnetic sheets and by one or more windings formed by a plurality of coils comprising bundles of electrically conductive wires. The coils are housed in cavities 12 in the pack 10 and have heads 14 which project from opposing end faces of the pack 10 and are compacted by the turns of a binding wire 16.

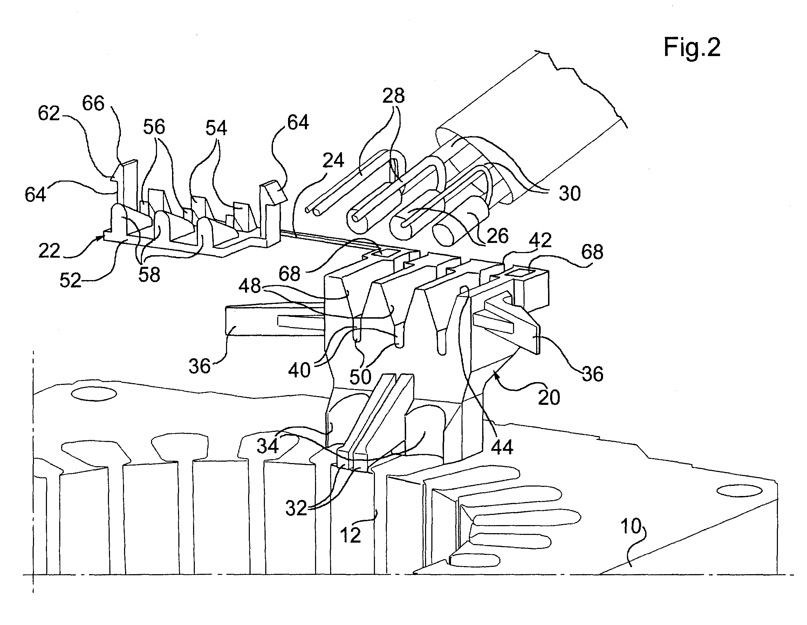

A connector device 18 is associated with the stator and bears on one of the end faces of the pack 10. The connector device comprises (Figs. 2 to 7) a body 20 and a cover 22. The body 20 and the cover 22, which may advantageously be made from molded plastic material, are connected by a flexible band 24 enabling the cover 22 to perform a tilting movement with respect to the body 20. As will be described in detail below, the connector device 18 houses connections 26 between ends 28 of the wires of the coils of the windings and ends 30 of wires for the electrical supply of the latter. These connections 26 may be produced using any known technique, for instance crimping, welding and the like.

The body 20 comprises association means at the heads 14 of the coils of the windings, which comprise a pair of bar projections 32 protruding centrally from the front face of the body 20 and respective projections with semi-circular profiles 34 disposed on both sides of the pair of bar projections 32. A respective wing 36 also projects from either side of the body 20 and comprises a recess 38 for housing the binding wire 16. The wings 36 are asymmetrical both as regards their positioning with respect to the body and their own geometry. They may in particular be of different lengths and be positioned at different heights.

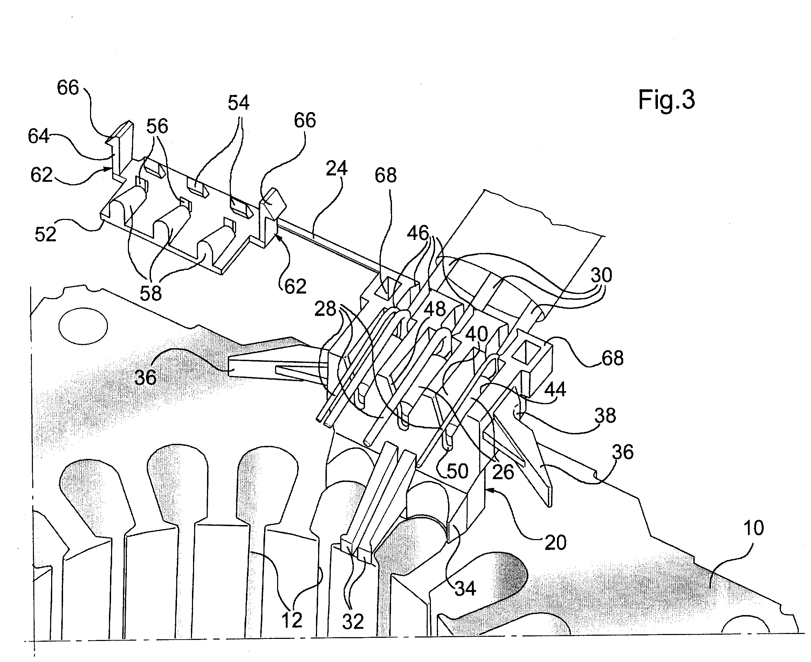

The body 20 comprises a plurality of oblong cavities 40 (typically three), open at their ends and along one side, which extend longitudinally at the location of the upper face of the body 20. The cavities 40 comprise (Fig. 3) a first section 42 of smaller cross-section in which respective ends 30 of the electrical supply wires are housed, and a second section 44 of larger cross-section, in which the electrical connections 26 and the ends 28 of the wires of the coils of the winding are housed. Both the end portions 46 of the first sections 42 of the cavities 40 have cross-sections tapering in the direction moving away from the centre of the sections 42. The portions facing the exterior of the second sections 44 of the cavities 40 are, in turn, closed by walls whose upper portions bound a slot 48 which tapers downwards and whose lower portions bound a slot 50 of smaller and constant width which starts from the lower end of the slot 48.

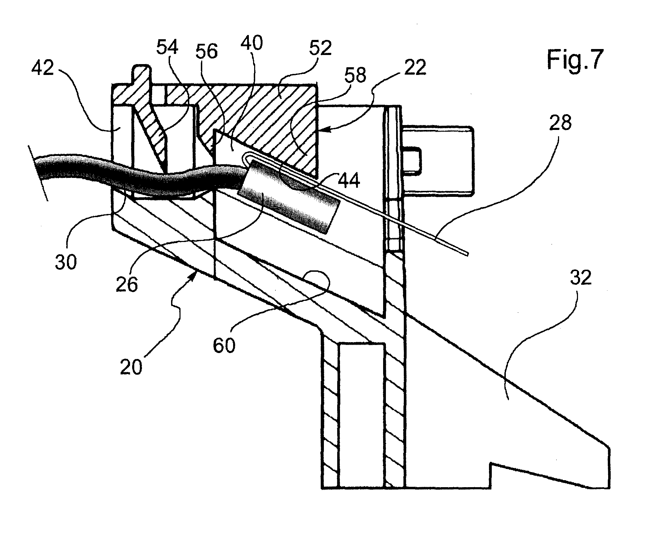

The cover 22 comprises a portion shaped as a plate 52 from which (Fig. 7) respective resilient tongues 54 protrude transversely downwards into the first section 42 of each respective cavity 40; these tongues 54 are inclined in the direction opposite the direction in which the end 30 of the electrical supply wire emerges from the body 20. Moreover, a first projection 56 protrudes transversely downwards from the plate 52 into each cavity 40 at the location of the zone of transition between the first and second sections 42, 44, and a second projection 58 protrudes downwards from the plate 52 into the section of greater cross-section 44. Each second projection 58 and the facing base section 60 of the respective cavity 40 have a profile inclined downwards in the direction in which the ends 28 of the wires of the coils of the winding emerge from the cavity 40.

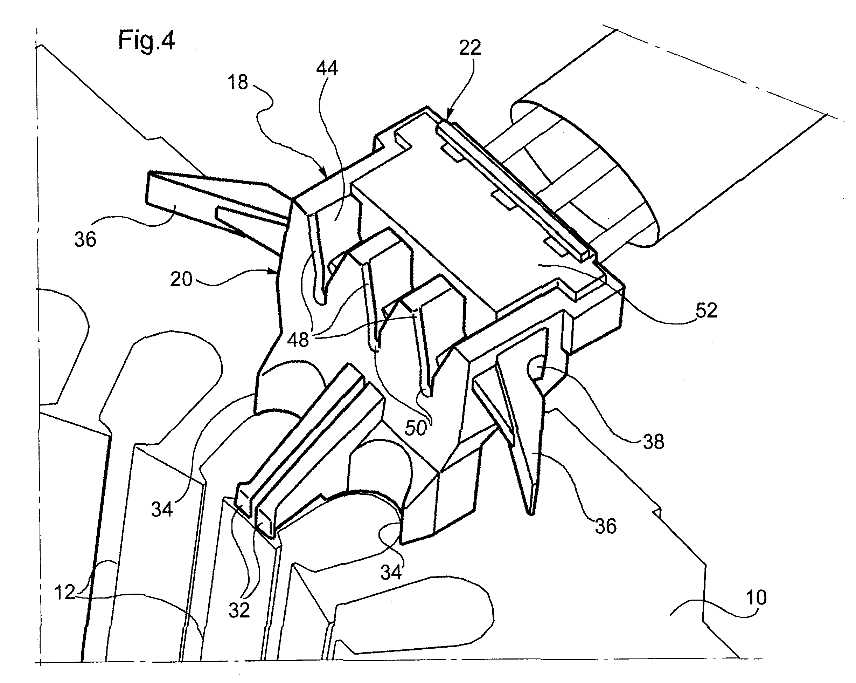

Respective resilient teeth 62 having a stem 64 which bears a projection 66 at the location of its distal end project transversely downwards from the lateral ends of the plate 52 of the cover 22 (Figs. 2 and 3). The stem 64 of each tooth 62 is inserted (Fig. 4) in a respective opening 68 provided through the body 20.

The method of assembly of the stator unit described above firstly includes (Fig. 2) the production of the connections 26 between the ends 28 of the wires of the coils of the winding and the ends 30 of the electrical supply wires. This operation is carried out separately using conventional techniques and leads to the production of connections 26 having a diameter greater than that of the wires connected. Subsequently (Fig. 3), each connection 26 is inserted in the second section 44 of a respective cavity 40 with the ends 28 of the wires of the coils of the winding also housed in the second sections 44, while the ends 30 of the electrical supply wires are housed in the first sections 42 of the cavities 40. Overall, the ends 28 of the wires of the coils are disposed as a prolongation of the ends 30 of the supply wires respectively associated and form an angle of approximately 180° therewith. During these operations, there is no risk of misplacing the cover 22 as it is connected to the body 20 by the flexible band 24, which may nevertheless be tilted to enable access to the cavities 40 of the body 20.

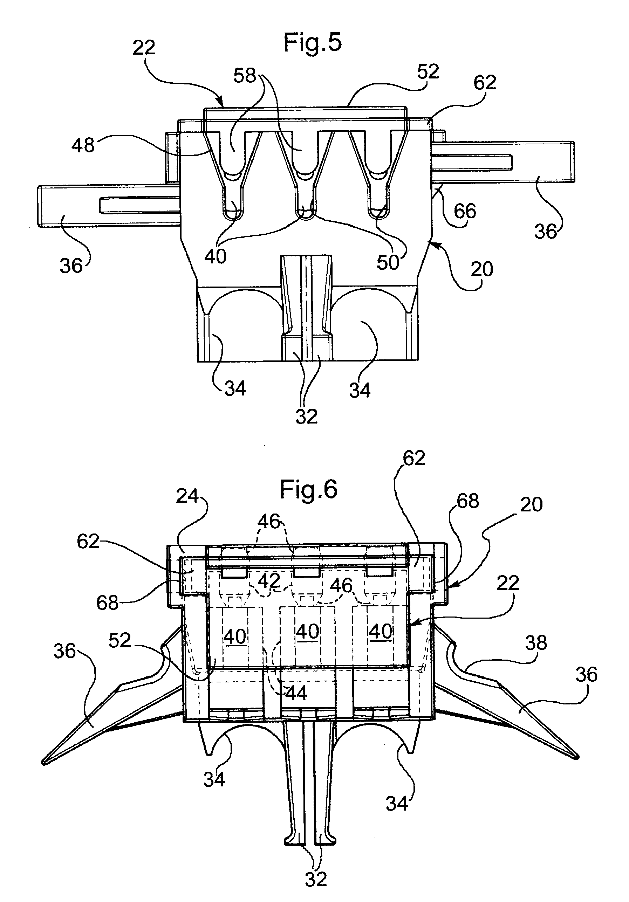

The cover 22 is then secured on the body 20 (Fig. 4) by causing the teeth 62 resiliently to penetrate into the openings 68, until the projections 66 project (Fig. 5) below the lower edge of the latter, thereby preventing any movement of detachment in the opposite direction, so as stably to join the cover 22 to the body 20 and to close part of the upper open side of the cavity 40. The fastening of the cover 22 causes (Fig. 7), as a result of the second projections 58, the lowering of the ends 28 of the wires of the coils of the winding towards the base 60 of the respective cavities. In this way, these ends 28 are forced to emerge from the cavities 40 via the slots 50 of smaller width, whose walls prevent any emergence from the cavities 40 of the connections 26 which could damage the heads 14 of the coils. Any movements in the opposite direction are prevented, on the contrary, by the cross-sectional narrowing at the transition from the second section 44 to the first section 42 of the cavities 40.

At the same time, the tongues 54 come into contact with the respective ends 30 of the electrical supply wires, exerting a pressure thereon. The latter efficiently counteracts any stresses likely to detach the supply wires from the connection device 18 as it increases as the stresses increase as a result of the inclination of the tongues 54. It will also be appreciated that this pressure is exerted on an electrically insulated section of the ends 30 of the supply wires, i.e. on a surface adapted to withstand it without any damage occurring in respect of the portions under electrical voltage.

The connection device 18 as assembled and bearing on a face of the pack 10 of sheets is then temporarily associated with the heads 14 of the coils by causing the pair of bar projections 32 and the distal ends of the projections with semi-circular profiles 34 to penetrate into the empty spaces between the heads 14 of adjacent coils (Fig. 1). The binding wire 16 is then passed into the recesses 38 of the wings 36 and about the heads 14 of the coils so as to secure the assembled connector device 18 to these latter in a stable and permanent manner.

Obviously, without prejudice to the principle of the invention, constructional details and embodiments thereof may be widely varied with respect to the above description, given purely by way of example, without thereby departing from its scope. For instance, the means for associating the body of the connector device with the heads of the coils may be substantially of any type, particularly as regards the number and the shape of the projections.

## Claims

1. A stator unit for a rotary electrical machine, in particular for an electric motor for hermetic compressors for refrigerators and the like, comprising:
- a stator formed by a pack (10) of magnetic sheets and by at least one winding formed by coils comprising bundles of electrically conductive wires housed in cavities (12) of the pack (10) and having heads (14) which project from opposite faces of the pack (10),
- a connector device (18) comprising a body (20) having a plurality of oblong cavities (40), open at their ends and along one side, which extend longitudinally, which cavities (40) house respective connections (26) between ends (28) of the wires of the coils of the winding and ends (30) of wires for the electrical supply of this winding, and
- means for associating the body (20) of the connector device (18) with the heads (14) of the coils,
this stator unit being **characterised in that** the connector device (18) further comprises a cover (22) for at least the partial closure of the open longitudinal side of the cavities (40) of the body (20), said cover (22) being provided with means retaining it on the body (20) and means exerting pressure on the ends (30) of the electrical supply wires disposed in a respective cavity (40).

2. A stator unit as claimed in claim 1, **characterised in that** the cavities (40) comprise a first section (42) of smaller cross-section in which respective ends (30) of the electrical supply wires are housed, and a second section (44) of larger cross-section, in which respective connections (26) and ends (30) of the wires of the coils are housed.

3. A stator unit as claimed in claim 2, **characterised in that** the end portions (46) of the first sections (42) of the cavities (40) have cross-sections tapering in the direction moving away from the centre of the first sections (42).

4. A stator unit as claimed in claim 2 or 3, **characterised in that** the outwardly facing parts of the second sections (44) of the cavities (40) are closed by walls which bound a slot (48) having at least one section tapering in a downward direction.

5. A stator unit as claimed in any one of the preceding claims, **characterised in that** the cover (22) comprises a portion shaped as a plate (52) from which respective resilient tongues (54) project transversely downwards into the first section (42) of each cavity (40), these resilient tongues (54) being inclined in the direction opposite to the direction in which the electrical supply wires emerge from the body (20), and acting as pressure means on the respective ends (30) of the electrical supply wires.

6. A stator unit as claimed in any one of the preceding claims 2 to 5, **characterised in that** a first projection (56) projects transversely downwards from a portion shaped as a plate (52) of the cover (22) into each cavity (40) at the location of the zone of transition between the first (42) and the second (44) section and a second projection (58) project downwards from the plate (52) into the second section (44).

7. A stator unit as claimed in claim 6, **characterised in that** each second projection (58) and the facing base section (60) of the respective cavity (40) have a profile inclined downwards in the direction in which the wires of the coils of the winding emerge from the body (20).

8. A stator unit as claimed in any one of the preceding claims, **characterised in that** respective resilient teeth (62) having a stem (64) which bears a projection (66) at the location of its distal end project transversely downwards from the lateral ends of the portion shaped as a plate (52) of the cover (22), the stem (64) of each tooth (62) being inserted in a respective opening (68) provided through the body (20) as a result of which the teeth (62) act as means retaining the cover (22) on the body (20).

9. A stator unit as claimed in any one of the preceding claims, **characterised in that** the means associating the body (20) of the connector device (18) with the heads (14) of the coils comprise a pair of bar projections (32) which project centrally from the front face of the body (20), and respective projections with a semi-circular profile (34) disposed at the location of each side of the pair of bar projections (32).

10. A stator unit as claimed in any one of the preceding claims, **characterised in that** it comprises a respective wing (36) which projects from each side of the body (20) and has a recess (38) for housing a binding wire (16).

11. A stator unit as claimed in claim 10, **characterised in that** the wings (36) are asymmetrical as regards their positioning with respect to the body (20) and/or their own geometry.

12. A stator unit as claimed in any one of the preceding claims, **characterised in that** the cover (22) and the body (20) of the connector device are connected by a flexible band (24) enabling the cover (22) to perform a tilting movement with respect to the body (20).

13. A method of assembly of a stator unit as claimed in any one of the preceding claims, comprising the stages of:
- insertion of respective ends (28) of wires of the coils of the winding connected to ends (30) of electrical supply wires in each cavity (40) of the body (20) of the connector device (18),
- fastening of the cover (22) to the body (20) enclosing the connections (26) of the ends (28) of the wires of the coils of the winding to the ends (30) of the electrical supply wires in the cavities (40), and
- positioning the body (20) closed by the cover (22) on a face of the pack (10) of sheets and associating it with the heads (14) of the coils.

14. A rotary electrical machine, in particular an electric motor, comprising a stator unit as claimed in any one of the preceding claims 1 to 12.

15. A compressor for refrigerators and the like comprising an electric motor as claimed in claim 14.
